Europäisches Patentamt

European Patent Office

Office européen des brevets

(19)

(11) Numéro de publication: **0 014 178**
**B1**

(12)

# FASCICULE DE BREVET EUROPEEN

(45) Date de publication du fascicule du brevet: **24.03.82**

(51) Int. Cl.³: **F 16 G 11/00**

(21) Numéro de dépôt: **80810012.7**

(22) Date de dépôt: **14.01.80**

(54) Dispositif d'accrochage destiné à être fixé à l'extrémité d'un cordon.

(30) Priorité: **17.01.79 CH 453/79**

(43) Date de publication de la demande:
**06.08.80 Bulletin 80/16**

(45) Mention de la délivrance du brevet:
**24.03.82 Bulletin 82/12**

(84) Etats contractants désignés:
**BE CH DE FR GB IT**

(56) Documents cités:
**FR - A - 801 769**
**FR - A - 1 084 986**
**US - A - 1 599 342**
**US - A - 2 838 819**
**US - A - 3 222 741**

(73) Titulaire: **Terraillon, Paul**
**Le Mont Gosse**
**F-74560 Monnetier-Mornex (FR)**

(72) Inventeur: **Terraillon, Paul**
**Le Mont Gosse**
**F-74560 Monnetier-Mornex (FR)**

(74) Mandataire: **Kirker, Gaylord E. et al,**
**c/o KIRKER & CIE 14, Rue du Mont-Blanc Case**
**postale 872**
**CH-1211 Genève 1 (CH)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Dispositif d'accrochage destiné à être fixé à l'extrémité d'un cordon.

On connaît déjà des dispositifs d'accrochage destinés à être fixés à l'extrémité d'un cordon, notamment d'un cordon élastique tel que ceux utilisés dans des appareils de culture physique. Le problème est d'avoir une fixation absolument sûre du dispositif à l'extrémité du cordon, car si la fixation permet un glissement du cordon, celui-ci finit par se détacher et frapper l'utilisateur. Les dispositifs connus n'offrent pas à cet égard la sécurité voulue et la présente invention vise à résoudre ce problème.

Ainsi, on connaît par le brevet français No. 801.769 une cosse pour câbles et cordages comprenant un corps présentant un trou axial pour recevoir une extrémité d'un câble ou d'un cordage, et une série de trous radiaux dans chacun desquels est disposé un organe de blocage formant oeillet à travers lequel passe le câble, et présentant un filetage coopérant avec un écrou disposé à l'extérieur du corps et prenant appui sur celui-ci. En serrant les écrous, on déplace longitudinalement les organes de blocage, déformant ainsi le câble ou cordage qui prend ainsi à l'intérieur du corps de la cosse une forme ondulée. L'inconvénient de cette construction est, d'une part, sa complication, et d'autre part, le fait que, comme il est bien connu, les écrous sont sujets à se dévisser sous l'effet de secousses.

On connaît aussi, par le brevet français No 1.084.986 une pince d'attache pour câble métallique, qui comprend un corps cylindrique présentant un trou diamétral la traversant de part en part et dans lequel on engage le câble. Ce corps présente en outre un trou radial et un tampon métallique destiné à être engagé dans ce trou radial pour venir agir sur le câble et le déformer. Mais la fixation du câble au corps de la pince ne peut être réalisée que par l'emploi d'une force considérable exercée sur le tampon métallique, telle que le métal de ce tampon flue et s'écoule le long du câble dans le trou diamétral. Une telle construction ne convient pas dans le cas d'un dispositif d'accrochage fait en matière plastique et utilisable par un artisan ou même par un particulier.

La présente invention a pour objet un dispositif d'accrochage destiné à être fixé à l'extrémité d'un cordon, dispositif qui est du type comprenant un corps, présentant une partie formant boucle d'accrochage, un premier évidement dans ce corps pour recevoir une extrémité du cordon, un second évidement, perpendiculaire au premier et faisant intersection avec lui, et un verrou prévu pour être glissé dans ce second évidement, pour bloquer la région terminale du cordon en l'obligeant à s'incurver fortement dans le second évidement pour solidariser ce cordon du dit corps. Le dispositif selon l'invention est caractérisé en ce que le verrou présente un cran d'arrêt venant en butée contre un épaulement du second évidement lorsque ce verrou est en position de travail et en ce que le second évidement présente, du côté prévu pour l'introduction du verrou, une forme convergente suivie d'un élargissement brusque formant l'épaulement pour comprimer le cran du verrou lors de son enfoncement dans cet évidement, jusqu'au moment où le cran atteint l'élargissement avec lequel il coopère pour empêcher le retrait du verrou.

Le dessin annexé représente, à titre d'exemple, une forme d'exécution du dispositif selon l'invention.

Fig. 1 en est une vue en coupe longitudinale,

Fig. 2 une vue en perspective du corps, et

Le dispositif représenté comporte un corps 1, de préférence en matière plastique moulée, présentant une partie 2 formant boucle d'accrochage. Un évidement cylindrique 3 est prévu dans le corps 1, en alignement avec la partie 2. Un second évidement 4 traverse de part en part le corps 1, perpendiculairement au premier évidement 3, et fait intersection avec ce dernier. Le dispositif comporte en outre un verrou 5 en matière plastique prévu pour être glissé dans le second évidement 4. Ce verrou présente un corps 6 à l'une des extrémités duquel est formée une forte saillie 7. Le corps 6 présente une partie 8 formant cran, comme on va le voir.

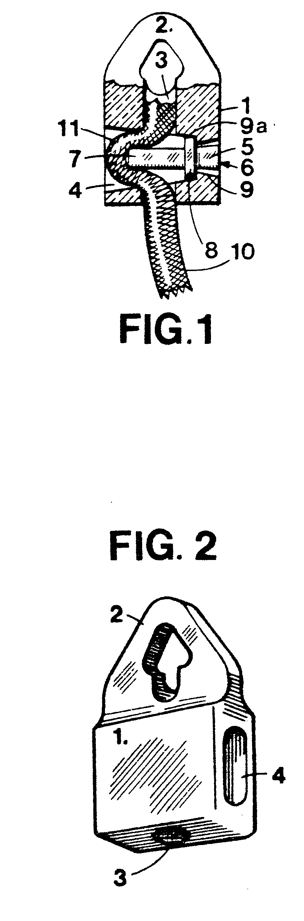

L'évidement 4 comprend, du côté où l'on introduit le verrou 5, à son intérieur (à droite sur la fig. 1), une forme convergente 9 suivie d'un élargissement brusque 9a.

Pour fixer un cordon 10 tel qu'un cordon élastique d'appareil de culture physique, on commence par enfiler l'extrémité du cordon jusqu'au fond de l'évidement 3 alors que le verrou 5 est hors du corps 1. Ceci fait, on force le verrou à la presse pour qu'il agisse par sa partie 7 pour incurver fortement le cordon en 11, dans la partie gauche (sur la fig. 1) de l'évidement 4. La force avec laquelle on fait agir ce verrou sur le cordon est assez grande pour que la partie incurvée 11 du cordon subisse un allongement maximum et que le cran 8, après avoid été comprimé lorsqu'on le force dans la partie convergente 9, dépasse l'élargissement 9a et coopère avec lui pour empêcher le retrait du verrou. Du fait de cette extension maximum du cordon dans la région 11, on est assuré que lors de l'emploi de l'appareil, cette partie ne pourra pas s'allonger davantage, ce qui exclut tout glissement ultérieur du cordon dans le corps 1 et son détachement accidentel de ce corps. Le dispositif est utilisable aussi dans le cas de cordons non élastiques. Dans ce cas, la tension créée dans la partie 11 suffit pour empêcher tout glissement du cordon à l'intérieur du dispositif.

**Revendication**

Dispositif d'accrochage destiné à être fixé à l'extrémité d'un cordon, comprenant un corps (1) présentant une partie (2) formant boucle d'accrochage, un premier évidement (3) dans ce corps pour recevoir une extrémité du cordon (10), un second évidement (4) perpendiculaire au premier et faisant intersection avec lui, et un verrou (5) prévu pour être glissé dans ce second évidement (4), pour bloquer la région terminale du cordon (10) en l'obligeant à s'incurver fortement dans le second évidement (4), pour solidariser ce cordon (10) du corps susdit (1), caractérisé en ce que le verrou (5) présente un cran d'arrêt (8) venant en butée contre un épaulement (9a) du second évidement (4) lorsque ce verrou (5) est en position de travail et en ce que le second évidement (4) présente, du côté prévu pour l'introduction du verrou (5), une forme convergente (9) suivie d'un élargissement brusque formant l'épaulement (9a), pour comprimer le cran (8) du verrou (5) lors de son enfoncement dans cet évidement (4), jusqu'au moment où le cran (8) atteint l'élargissement (9a) avec lequel il coopère pour empêcher le retrait du verrou (5).

## Claim

Hooking device intended to be fixed at the end of a string, comprising a body (1) having a portion (2) forming a hooking loop, a first recess (3) in said body to receive one end of the string (10), a second recess (4) perpendicular to the frist recess and intersecting the first recess, and a lock (5) provided to be inserted into said second recess (4), to lock the ending part of the string (10) by forcing it to take a sharply curved shape within the second recess (4), to interlock the string with said body (1), characterized in that the lock (5) has a stop notch (8) coming into abatment against a shoulder (5a) of the second recess (4) when said lock (5) is in a working position and in that the second recess (4) has, on the side provided for inserting the lock (5), a converging form (9) followed with an abrupt enlargement forming the shoulder (9a), to compress the stop notch (8) of the lock (5) during its insertion into this recess (4), up to the point where the stop notch (8) reaches the enlargement (9a) with which it co-operates to prevent the withdrawal of the lock (5).

## Patentanspruch

Aufhängevorrichtung zur Befestigung am Ende einer Kordel, enthaltend ein Gehäuse (1) mit einem Teil (2) als Aufhängeschlaufe ausgebildet, einen ersten Hohlraum (3) im Gehäuse um das Ende der Kordel (10) aufzunehmen, einen zweiten Hohlraum (4) senkrecht zum ersten und ihn durchstossend, und einen Riegel (5), vorgesehen um in den zweiten Hohlraum (4) eingefügt zu werden, um das Endstück der Kordel (10), welche gezwungen wird sich stark im zweiten Hohlraum (4) zu krümmen, damit zu blockieren, womit die Kordel (10) sich mit dem Gehäuse (1) verbindet, dadurch gekennzeichnet, dass der Riegel (5) einen Haltevorsprung (8) aufweist, der gegen eine Schulter (8a) des zweiten Hohlraumes (4) in Anschlag kommt, wenn der Riegel (5) in Arbeitsstellung ist und dass der zweite Hohlraum (4) auf der für die Einführung des Riegels (5) vorgesehenen Seite eine sich verengende Form (9) aufweist, welche sich plötzlich ausweitet, womit die Schulter (9a) sich ergibt, um den Haltevorsprung (8) des Riegels (5) bei seinem Einstossen in diesen Hohlraum (4) zu komprimieren bis zum Augenblick, wo der Haltevorsprung (8) die Ausweitung (9a) erreicht, mit welcher er zusammenwirkt um die Zurückbewegung des Riegels (5) zu verhindern.

FIG.1

FIG. 2